# DEMANDE DE BREVET EUROPEEN

(11) **EP 4 356 720 A1**
(43) Date de publication de la demande: **24.04.2024**
(21) Numéro de dépôt: 23202698.9
(22) Date de dépôt: 10.10.2023
(51) Int. Cl.: A01G 5/02

(54) **INSTALLATION ET PROCÉDÉ POUR LA FORMATION DE BOUQUET, EN PARTICULIER DE BOUQUET ROND À TIGES VRILLÉES, À PARTIR DE FLEURS COUPÉES**

(30) Priorité: 17.10.2022 FR 2210675; 17.10.2022 FR 2210676
(71) Demandeur: Mecaflor, 44470 Thouare Sur Loire (FR)
(72) Inventeur: SURRIRAY, Laurent, 44470 THOUARE-SUR-LOIRE (FR)
(74) Mandataire: Ipsilon

(57) **Abrégé**

Installation (1) pour la formation de bouquet à partir de fleurs (20) coupées comprenant un poste (2) de conformation, un support (3) de stockage et une unité (4) de pilotage, le poste (2) de conformation comprenant un écran (6) d'affichage et un conformateur (5) délimitant une pluralité d'emplacements (7) de réception de fleurs et comprenant, pour chaque emplacement (7), au moins un élément (8) de repérage dudit emplacement (7), et l'unité (4) de pilotage étant configurée pour afficher sur l'écran (6) simultanément les représentations d'au moins un emplacement (7) du conformateur (5) et/ou du ou d'au moins un élément (8) de repérage dudit emplacement (7) et d'au moins une fleur à positionner dans ledit emplacement (7), le poste (2) de conformation est équipé d'un détecteur (9) d'introduction d'au moins une fleur (20) dans le conformateur (5), le support (3) de stockage, positionné à côté du poste (2) de conformation, présente une pluralité de compartiments (10) équipés chacun d'un dispositif d'éclairage (11) et d'un dispositif de contrôle d'accès (12), et l'unité (4) de pilotage est configurée pour commander chaque dispositif d'éclairage (11) et l'affichage de l'écran (6) en fonction des données fournies par le détecteur (9) et les dispositifs de contrôle d'accès (12).

## Description

La présente invention concerne une installation et un procédé pour la formation de bouquet, en particulier de bouquet rond à tiges vrillées, à partir de fleurs coupées.

Elle concerne en particulier une installation pour la formation de bouquet à partir de fleurs coupées comprenant au moins un poste de conformation dudit bouquet, un support de stockage pour le stockage de fleurs coupées en attente d'un transfert dans le poste de conformation et une unité de pilotage, le poste de conformation comprenant un conformateur et au moins un écran d'affichage d'image, ledit conformateur délimitant une pluralité d'emplacements de réception des fleurs et comprenant, pour chaque emplacement, au moins un élément de repérage dudit emplacement, et l'unité de pilotage étant configurée pour afficher sur le au moins un écran simultanément les représentations d'au moins un emplacement du conformateur et/ou du ou d'au moins un élément de repérage dudit emplacement et d'au moins une fleur à positionner dans ledit emplacement.

Une telle installation est connue comme l'illustre le document EP 3 285 563.

La demande internationale WO 2019/123438 décrit une installation similaire à celle décrite dans le brevet EP-3.285.563. L'installation comprend un écran d'affichage apte à fournir des informations à l'opérateur.

La demande internationale WO 2022/200925 décrit un système automatique de collecte de fleurs pour former un bouquet à partir d'une représentation virtuelle fournie par un utilisateur.

Les installations développées jusqu'à présent sont encombrantes et nécessitent l'intervention de plusieurs opérateurs.

Un but de l'invention est de proposer une installation permettant la réalisation d'un bouquet par un opérateur unique non qualifié.

Un autre but de l'invention est de garantir le nombre de fleurs par bouquet et l'absence d'erreur dans la réalisation du bouquet.

A cet effet, l'invention a pour objet une installation pour la formation de bouquet à partir de fleurs coupées, ladite installation comprenant au moins un poste de conformation dudit bouquet, un support de stockage pour le stockage de fleurs coupées en attente d'un transfert dans le poste de conformation et une unité de pilotage, le poste de conformation comprenant un conformateur et au moins un écran d'affichage, ledit conformateur délimitant une pluralité d'emplacements de réception de fleurs et comprenant, pour chaque emplacement, au moins un élément de repérage dudit emplacement, et l'unité de pilotage étant configurée pour afficher sur le au moins un écran simultanément les représentations d'au moins un emplacement du conformateur et/ou du ou d'au moins un élément de repérage dudit emplacement et d'au moins une fleur à positionner dans ledit emplacement, caractérisée en ce que le poste de conformation est équipé d'un détecteur d'introduction d'au moins une fleur dans le conformateur, en ce que le support de stockage, positionné à côté du poste de conformation, présente une pluralité de compartiments équipés chacun au moins d'un dispositif d'éclairage et d'un dispositif de contrôle d'accès, et en ce que l'unité de pilotage est configurée pour commander chaque dispositif d'éclairage et l'affichage de l'écran en fonction des données fournies par le détecteur et les dispositifs de contrôle d'accès, En particulier, l'unité de pilotage est configurée pour commander chaque dispositif d'éclairage en fonction au moins des données fournies par les dispositifs d'accès et l'affichage de l'écran en fonction au moins des données fournies par le détecteur du conformateur. La présence de dispositifs d'éclairage permet à l'opérateur inexpérimenté de repérer immédiatement la fleur à saisir dans un compartiment du support de stockage pour venir la positionner dans le conformateur. La présence de dispositifs de contrôle d'accès au niveau des compartiments permet de garantir que le bon compartiment a été sollicité. La présence d'un écran affichant un modèle de pose dans le conformateur sous forme de représentations simultanées d'au moins un emplacement du conformateur et/ou du ou d'au moins un élément de repérage dudit emplacement et d'au moins une fleur à positionner dans ledit emplacement permet à un opérateur inexpérimenté de positionner correctement la fleur issue du support de stockage dans le conformateur. La présence d'un détecteur au niveau du conformateur permet de contrôler qu'une fleur a été insérée dans le conformateur et d'afficher de manière automatique le modèle de pose suivant sur l'écran de sorte que l'opérateur ne perd pas de temps. Les dispositifs d'éclairage, les dispositifs de contrôle d'accès et le détecteur coopèrent donc, avec l'affichage sur l'écran d'un modèle de pose, à la réalisation en un temps court d'un bouquet de fleurs, tel qu'un bouquet rond à tiges vrillées, par un opérateur sans qualification particulière et sans risque d'erreur du fait de la multiplication des contrôles.

Selon un mode de réalisation de l'invention, l'unité de pilotage est configurée pour :
- recevoir un fichier de données correspondant aux fleurs d'un bouquet avec, pour chaque fleur, au moins une donnée représentative de l'emplacement de la fleur dans le conformateur et une donnée correspondant au compartiment du support de stockage à éclairer avec le dispositif d'éclairage associé,
- pour au moins un premier couple de données, activer le dispositif d'éclairage du compartiment du support de stockage stockant la fleur correspondant audit couple de données et afficher simultanément à l'écran au moins les représentations d'au moins un emplacement du conformateur et/ou du ou d'au moins un élément de repérage dudit emplacement et de la fleur correspondant audit couple de données à positionner dans ledit emplacement et,
- passer à au moins un nouveau couple de données lorsque le dispositif de contrôle d'accès et le détecteur ont détectés respectivement la sortie d'une fleur du compartiment éclairé du support de stockage stockant la fleur correspondant audit premier couple de données et l'entrée d'une fleur dans le conformateur. On comprend qu'ainsi l'affichage à l'écran d'un nouveau modèle de pose correspondant à au moins un nouveau couple de données ne s'opère pas lorsque l'opérateur n'a pas saisi une fleur dans le bon compartiment du support de stockage ou l'opérateur n'a pas introduit la fleur saisie dans le conformateur. L'opérateur est ainsi immédiatement alerté d'une erreur.

Selon un mode de réalisation de l'invention, l'unité de pilotage est configurée pour, au moins pour le premier couple de données, désactiver le dispositif d'éclairage du compartiment du support de stockage stockant la fleur correspondant audit premier couple de données au moins lorsque le dispositif d'accès dudit compartiment a détecté la sortie d'une fleur dudit compartiment. Ainsi, la désactivation du dispositif d'éclairage permet à l'opérateur par simple contrôle visuel de vérifier qu'il a saisi la bonne fleur dans le support de stockage pour son transfert dans le conformateur.

Selon un mode de réalisation de l'invention, au moins l'un des compartiments du support de stockage qui se présente sous forme d'un couloir allongé est réglable en largeur. Il en résulte la possibilité d'adapter rapidement l'installation à tout type de fleurs.

Selon un mode de réalisation de l'invention, le support de stockage comprend au moins un plan de travail et des intercalaires et au moins l'un des compartiments, qui se présente sous forme d'un couloir, est formé par l'espace laissé libre entre deux intercalaires. Les fleurs sont ainsi parfaitement stockées sans risque d'endommagement.

Selon un mode de réalisation de l'invention, les intercalaires sont montés mobiles dans le sens d'un rapprochement ou d'un écartement l'un de l'autre pour un réglage en largeur dudit compartiment.

Selon un mode de réalisation de l'invention, chaque intercalaire se présente sous forme d'une lame portant au moins une partie d'un dispositif d'éclairage et au moins une partie de l'un des dispositifs de contrôle d'accès. Ainsi, le réglage en position des intercalaires peut s'opérer sans avoir en sus à repositionner les dispositifs d'éclairage ou les dispositifs de contrôle d'accès.

Selon un mode de réalisation de l'invention, les intercalaires sont montés sur un arbre commun et sont, par rapport audit arbre, montés mobiles à coulissement le long dudit arbre et à pivotement autour dudit arbre pour le passage d'une position basse en appui sur le plan de travail à une position haute écartée du plan de travail. Il en résulte la possibilité d'un nettoyage aisé du plan de travail sans nuire à la facilité de réglage en position des intercalaires.

Selon un mode de réalisation de l'invention, le dispositif d'éclairage d'au moins l'un des compartiments du support de stockage est muni d'au moins un organe d'éclairage formant un témoin lumineux allumé à l'état activé du dispositif d'éclairage. Un tel dispositif d'éclairage forme un témoin lumineux qui est à l'état éclairé tant que la fleur du compartiment associé au dispositif d'éclairage et correspondant au modèle de pose affiché à l'écran n'a pas été extraite du compartiment et à l'état éteint une fois la fleur extraite dudit compartiment. L'opérateur peut ainsi par simple contrôle visuel vérifier que son geste est correct.

Selon un mode de réalisation de l'invention, le dispositif d'éclairage d'au moins l'un des compartiments du support de stockage est muni d'au moins un organe d'éclairage présentant plusieurs couleurs d'éclairage et l'unité de pilotage est configurée pour commander la couleur d'éclairage du ou des organes d'éclairage. L'unité de pilotage peut être configurée pour commander la couleur d'éclairage dudit organe d'éclairage en fonction des caractéristiques de couleur de la fleur à extraire dudit compartiment. Cette disposition permet de stocker dans un même compartiment un même type de fleurs avec des couleurs différentes desdites fleurs sans perturber l'opérateur.

Selon un mode de réalisation de l'invention, au moins l'un des compartiments du support de stockage est équipé d'un logement pour la réception d'un seau. Ainsi, les fleurs peuvent être stockées à plat ou à l'état dressé selon le type de fleurs.

Selon un mode de réalisation de l'invention, le dispositif de contrôle d'accès d'au moins l'un des compartiments du support de stockage est un dispositif optique comprenant au moins un émetteur et un récepteur. L'émetteur et le récepteur peuvent ainsi par exemple être reliés par un rayon lumineux généralement invisible à l'oeil, ce rayon étant coupé par l'opérateur lors de la sortie d'une fleur du compartiment.

L'invention a encore pour objet un procédé pour la formation de bouquet à partir de fleurs coupées avec une installation pour la formation de bouquet à partir de fleurs coupées, caractérisé en ce que l'installation est du type précité, et le procédé comprend au moins les étapes
- de réception d'un fichier de données correspondant aux fleurs d'un bouquet avec, pour chaque fleur, au moins une donnée représentative de l'emplacement de la fleur dans le conformateur et une donnée correspondant au compartiment du support de stockage à éclairer avec un dispositif d'éclairage associé,
- pour au moins un premier couple de données, d'activation du dispositif d'éclairage du compartiment du support de stockage stockant la fleur correspondant audit couple de données et d'affichage simultané à l'écran d'au moins les représentations d'au moins un emplacement du conformateur et/ou du ou d'au moins un élément de repérage dudit emplacement et de la fleur correspondant audit couple de données à positionner dans ledit emplacement et,
- de passage à au moins un nouveau couple de données lorsque le dispositif de contrôle d'accès et le détecteur ont détecté respectivement la sortie d'une fleur du compartiment éclairé du support de stockage stockant la fleur correspondant audit premier couple de données et l'entrée d'une fleur dans le conformateur.

### Brève description des dessins

L'invention sera bien comprise à la lecture de la description suivante d'exemples de réalisation, en référence aux dessins annexés dans lesquels :
[Fig. 1] représente une vue en perspective d'une installation conforme à l'invention ;
[Fig. 2] représente une vue en perspective d'une installation conforme à l'invention lors de l'affichage d'un premier modèle de pose à l'état allumé d'un compartiment stockant une fleur correspondant au modèle de pose ;
[Fig. 3] représente une vue en perspective d'une installation conforme à l'invention lors de l'affichage d'un premier modèle de pose à l'état éteint du compartiment correspondant à la fleur du modèle de pose après saisie de la fleur dans le compartiment et en cours de pose de ladite fleur dans le conformateur ;
[Fig. 4] représente une vue en perspective d'une installation conforme à l'invention lors de l'affichage d'un nouveau modèle de pose à l'état allumé d'un compartiment stockant une fleur correspondant au modèle de pose ;
[Fig. 5] représente une vue en perspective d'un poste de conformation ;
[Fig. 6] représente une vue partielle en perspective d'un support de stockage prise depuis l'arrière dudit support ;
[Fig. 7] représente sous forme d'un bloc diagramme fonctionnel les étapes de formation d'un bouquet.

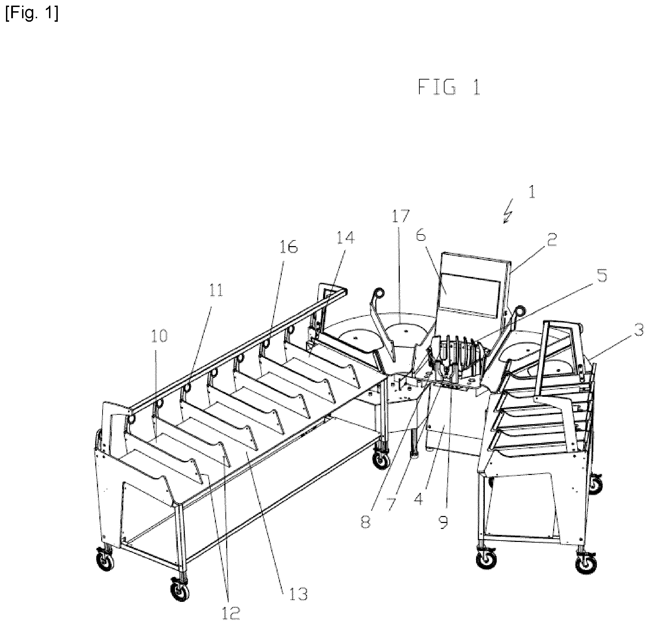

Comme mentionné ci-dessus, l'invention a pour objet une installation 1 pour la formation de bouquet, en particulier de bouquet rond à tiges dites vrillées, du type de celle représentée à la figure 1. Le bouquet 1 est formé au moins à partir de fleurs coupées. Par fleur coupée, on entend ici un végétal avec une tige, une extrémité libre et une extrémité opposée munie d'un élément d'ornement, tel qu'une fleur, une feuille ou similaire. Ainsi, un branchage est, au sens de la présente demande de brevet, également considéré comme une fleur coupée.

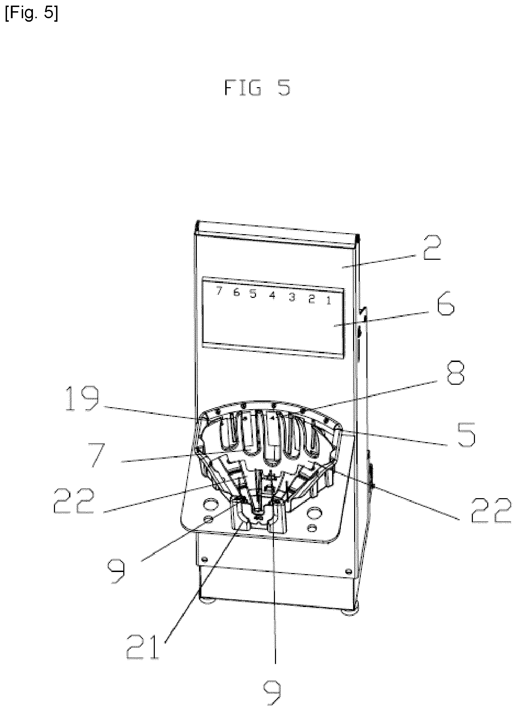

Cette installation 1 comprend un poste 2 de conformation du bouquet, représenté plus en détail à la figure 5, un support 3 de stockage pour le stockage de fleurs 20 coupées en attente d'un transfert dans le poste 2 de conformation et une unité 4 de pilotage. Le poste 2 de conformation comprend, comme représenté à la figure 5, un conformateur 5 et au moins un écran 6 d'affichage. Le conformateur 5 délimite une pluralité d'emplacements 7 de réception des fleurs et comprend, pour chaque emplacement 7, au moins un élément 8 de repérage dudit emplacement 7.

Dans l'exemple représenté, le conformateur 5 est similaire à celui décrit dans le brevet EP-3.285.563. En particulier, ce conformateur 5 comprend une surface 19 courbe dite de référence contre laquelle les extrémités équipées de fleurs ou autre élément d'ornement des tiges de fleurs sont aptes à prendre appui, un support 21 positionné en vis-à-vis de la surface 19 de référence, et apte à supporter les tiges au niveau de leur extrémité libre, et un gabarit de pose 22 interposé entre la surface 19 de référence et le support 21.

Le gabarit de pose 22 est généralement formé d'une pluralité de couloirs positionnés côte-à-côte à disposition rayonnante autour du support 21 pour une orientation de l'une des extrémités, qui est ouverte, de chaque couloir, en direction du support 21.

Chaque couloir comprend donc une extrémité fermée par la surface 19 de référence, tandis que son extrémité opposée ouverte est orientée en direction du support 21.

Le support 21 peut avoir la forme d'un flan en métal ou en matière de synthèse positionné sur tranche en configuration d'utilisation, ledit flan étant muni d'une encoche dans sa partie supérieure. L'un des bords de l'encoche se prolonge en direction de l'intérieur de l'ouverture ménagée par l'encoche pour former un rétrécissement de ladite ouverture.

Le support 21 présente ainsi la forme d'un berceau à fond courbe en arc de cercle.

L'extrémité libre de chaque tige est donc introduite dans l'ouverture ménagée dans l'encoche ou la forme en berceau dudit support 21 tandis que le reste de la tige s'étend à l'intérieur d'un couloir.

Les couloirs 5 peuvent être positionnés côte-à-côte dans un même plan.

Les couloirs 5 peuvent également être positionnés côte-à-côte mais disposés à des niveaux différents, comme dans l'exemple représenté.

La surface 19 de référence est formée par une surface courbe en arc de cercle qui ferme l'extrémité des couloirs opposée à celle ouverte en direction du support 21. Le creux de l'arc de cercle est orienté en direction du support 21.

L'opérateur est positionné en regard du conformateur 5 et dispose à plat une tige de fleur dans un couloir en utilisant, si nécessaire, la surface 19 de référence comme surface d'appui du sommet côté fleur de la tige et en introduisant l'extrémité opposée de la tige dans le support 21. Chaque emplacement 7 correspond donc à un couloir.

Ce conformateur 5 comprend, pour chaque emplacement 7, au moins un élément 8 de repérage dudit emplacement 7. Cet élément 8 de repérage peut être formé par un marquage, tel qu'un numéro du compartiment, une couleur associée audit emplacement 7, une forme de l'emplacement 7 différente d'un emplacement 7 à un autre, etc.

Dans l'exemple représenté, chaque couloir, formant un emplacement 7, est associé à un numéro et à un code couleur. L'écran 6 d'affichage, qui peut être formé d'un ou plusieurs terminaux d'affichage, est idéalement positionné au-dessus du conformateur 5. Il s'étend ainsi en vis-à-vis du regard de l'opérateur placé devant le conformateur 5. Généralement, un seul écran ou terminal d'affichage par conformateur 5 suffit.

L'unité 4 de pilotage se présente quant à elle sous la forme d'un système électronique et informatique qui comprend par exemple un microprocesseur et une mémoire de travail. Selon un aspect particulier, l'unité de pilotage peut se présenter sous la forme d'un automate programmable.

Autrement dit, les fonctions et étapes décrites peuvent être mise en oeuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array , ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application ). Il est aussi possible de combiner des parties informatiques et des parties électroniques.

Lorsqu'il est précisé que l'unité ou des moyens ou modules de ladite unité 4 sont configurés pour réaliser une opération donnée, cela signifie que l'unité 4 comprend des instructions informatiques et les moyens d'exécution correspondants qui permettent de réaliser ladite opération et/ou que l'unité 4 comprend des composants électroniques correspondants.

L'unité 4 de pilotage est configurée pour afficher sur l'écran 6 simultanément les représentations d'au moins un emplacement 7 du conformateur 5 et/ou du ou d'au moins un élément 8 de repérage dudit emplacement 7 et d'au moins une fleur à positionner dans ledit emplacement 7. Ainsi, l'écran 6 affiche par exemple une photo de fleur avec la couleur et le numéro de l'emplacement 7 dans lequel la fleur doit être disposée. Ces représentations sont appelées un modèle de pose. Elles permettent à l'opérateur d'identifier rapidement de manière visuelle la fleur et l'emplacement 7 du conformateur 5 à charger avec ladite fleur.

Bien évidemment, un modèle de pose peut comprendre plusieurs fleurs et plusieurs emplacements sans sortir du cadre de l'invention dans le cas d'un bouquet complexe et volumineux.

De manière caractéristique à l'invention, le poste 2 de conformation est équipé d'un détecteur 9 d'introduction d'au moins une fleur 20 dans le conformateur 5. Ce détecteur 9 est disposé au niveau du conformateur 5. Ce détecteur 9 est, dans l'exemple représenté, disposé au niveau du support 21 en berceau du conformateur 5. Ce détecteur 9 peut être formé par deux capteurs disposés l'un, sur l'une des branches, l'autre, sur l'autre des branches du berceau. Ces capteurs sont reliés par un faisceau lumineux, de préférence invisible à l'œil nu. Le faisceau est interrompu lors de l'introduction d'une fleur dans le conformateur 5. Cette information est adressée à l'unité 4 de pilotage.

Bien évidemment, tout autre type de détection de l'introduction d'une fleur dans le conformateur peut être envisagé sans sortir du cadre de l'invention.

Le support 3 de stockage est quant à lui positionné à côté du poste 2 de conformation pour permettre à l'opérateur de transférer des fleurs du support 3 de stockage au poste 2 de conformation.

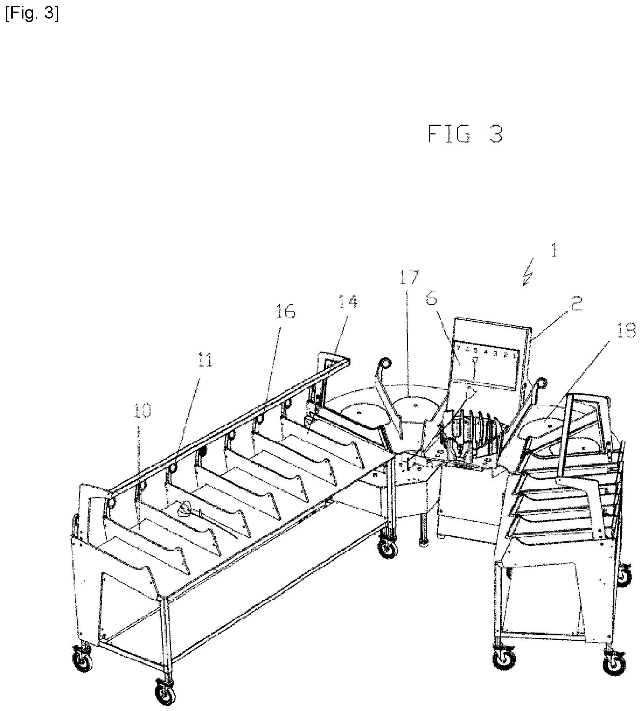

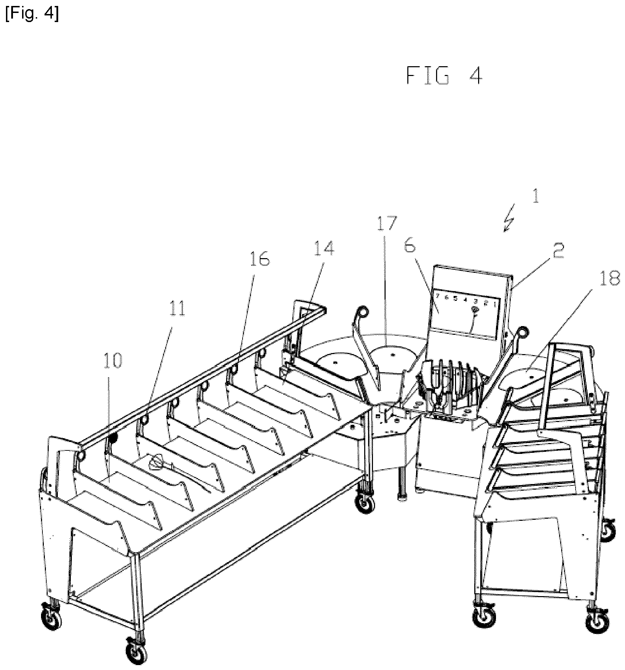

L'architecture du support 3 de stockage peut être diverse et variée. Ainsi, dans l'exemple représenté aux figures 1 à 4, le poste de conformation présente avec le support 3 de stockage une architecture en fer à cheval ou en U, le poste de conformation formant l'âme du U et le support 3 de stockage les deux branches du U. Le support 3 de stockage aurait pu présenter avec le poste de conformation une architecture en L ou en U ou tout autre architecture sans sortir du cadre de l'invention.

Indépendamment de sa forme, le support 3 de stockage est configuré pour délimiter une pluralité de compartiments 10. Chaque compartiment 10 est équipé au moins d'un dispositif d'éclairage 11 et d'un dispositif de contrôle d'accès 12.

Dans les exemples représentés, chaque compartiment 10 du support 3 de stockage se présente sous forme d'un couloir allongé réglable en largeur.

En particulier, le support 3 de stockage comprend au moins un plan 13 de travail et des intercalaires 14. Au moins l'un des compartiments 10, en l'occurrence ici chaque compartiment 10 qui se présente sous forme d'un couloir, est formé par l'espace laissé libre entre deux intercalaires 14.

Dans l'exemple représenté, le plan 13 de travail du support 3 de stockage est interrompu dans la zone 8 où est disposé le poste 2 de conformation. Le plan 13 de travail se présente donc ici en deux parties ou tronçons s'étendant de part et d'autre du poste 2 de conformation. Chaque partie de plan de travail comprend une pluralité de compartiments 10 disposés côte à côte avec les intercalaires 14 délimitant un compartiment s'étendant transversalement à l'axe longitudinal du plan de travail.

Dans l'exemple représenté, le plan 13 de travail forme une surface inclinée depuis une extrémité de ladite partie du plan de travail en direction de son extrémité opposée mais cette surface aurait pu être, de manière équivalente, horizontale.

Le plan 13 de travail est ici formé par un plateau. Ce plateau est supporté par des pieds qui peuvent être équipés de roues pour permettre un déplacement au sol du plan de travail. Les intercalaires 14 s'étendent au moins partiellement au-dessus du plan 13 de travail. Une partie de ces intercalaires 14 sont parallèles entre eux. Chaque intercalaire 14 se présente sous forme d'une lame portant au moins une partie d'un dispositif d'éclairage 11 et au moins une partie de l'un des dispositifs 2 de contrôle d'accès 12.

Dans les exemples représentés, les intercalaires 14 sont montés mobiles dans le sens d'un rapprochement ou d'un écartement l'un de l'autre pour un réglage en largeur du compartiment 10. En particulier, les intercalaires 14 sont montés sur un arbre commun 15 et sont, par rapport audit arbre 15, montés mobiles à coulissement le long dudit arbre 15 et à pivotement autour dudit arbre 15 pour le passage d'une position basse en appui sur le plan 13 de travail à une position haute écartée du plan 13 de travail.

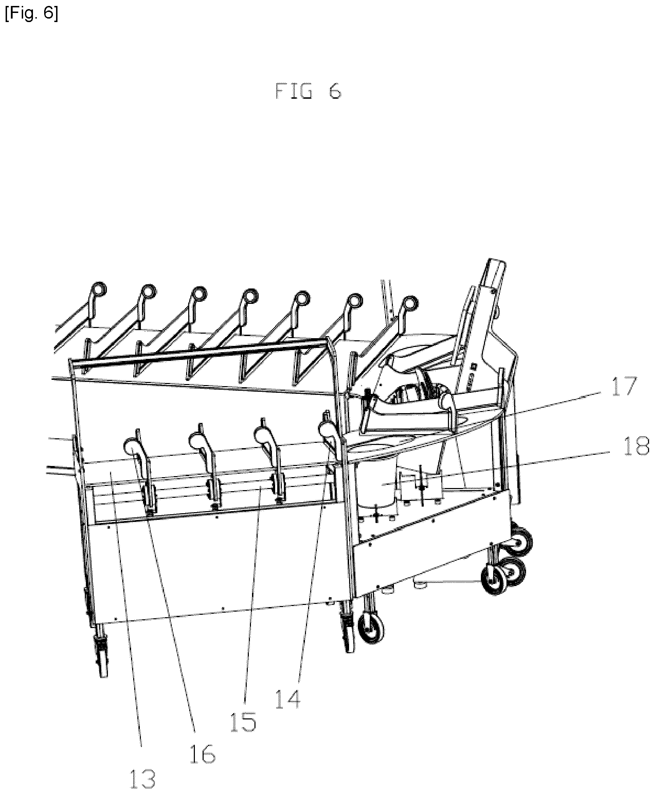

Cet arbre 15 commun visible à la figure 6 s'étend ici le long d'un côté longitudinal du plan de travail correspondant au côté longitudinal du plan de travail opposé à celui devant lequel se tient l'opérateur. Chaque lame formant un intercalaire 14 est munie d'un perçage traversant pour le passage de l'arbre 15 commun. Une rotation de l'arbre 15 entraîne un déplacement simultané à pivotement de l'ensemble des intercalaires montés sur ledit arbre 15 commun. Ce passage traversant permet également à chaque intercalaire 14 de coulisser axialement sur l'arbre 15 commun. Dans les exemples représentés, les deux compartiments 10 disposés à une extrémité du plan de travail sont équipés d'un logement 17 pour la réception d'un seau 18. Cette conception des compartiments 10 permet le stockage des fleurs coupées non plus à plat, mais à l'état dressé.

Comme mentionné ci-dessus, chaque compartiment 10 est équipé d'au moins un dispositif d'éclairage 11. Dans les exemples représentés, chaque dispositif d'éclairage 11 est porté par un intercalaire 14, mais aurait pu être positionné en un autre emplacement du compartiment, même si la solution n'est pas préférée.

Le dispositif d'éclairage 11 d'au moins un, de préférence de chacun des compartiments 10 du support 3 de stockage est muni d'au moins un organe d'éclairage 16 formant un témoin lumineux allumé à l'état activé du dispositif d'éclairage 11.

Chaque organe d'éclairage 16 peut être formé par une diode électroluminescente ou un groupe de diodes électroluminescentes, ou tout autre type d'organe d'éclairage.

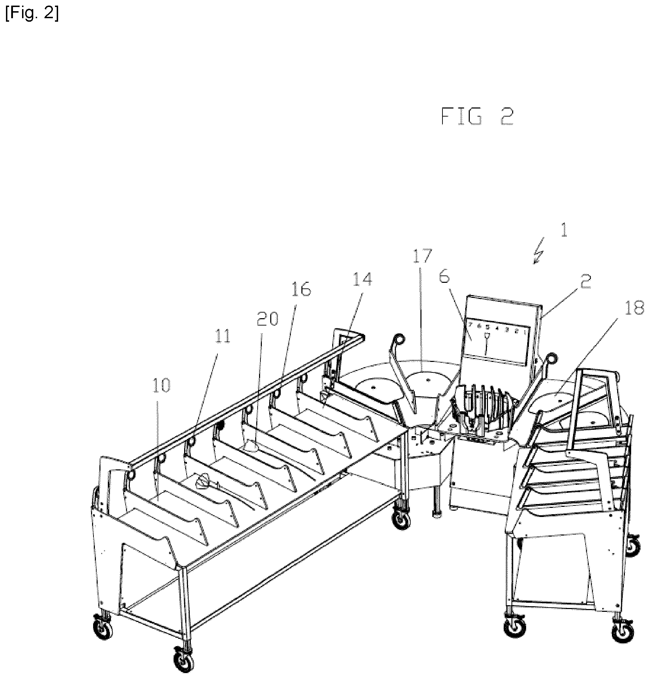

Cet organe d'éclairage 16 a pour fonction d'attirer l'oeil de l'opérateur pour lui permettre de visualiser rapidement et sans erreur le compartiment 10 du support 3 de stockage duquel il doit extraire une fleur coupée à positionner dans le conformateur 5. Cet organe d'éclairage 16 vient donc par exemple au-dessus du compartiment 10 devant être sollicité au droit d'un intercalaire servant à la délimitation dudit compartiment, comme dans l'exemple représenté à la figure 2.

Pour parfaire l'installation, notamment lorsque cette dernière est destinée à la réalisation de bouquets complexes, c'est-à-dire avec un grand nombre de fleurs, au moins l'un, de préférence chacun des dispositifs d'éclairage 11 des compartiments est muni d'au moins un organe d'éclairage 16 présentant plusieurs couleurs d'éclairage et l'unité 4 de pilotage est configurée pour commander la couleur d'éclairage du ou des organe 16 d'éclairage du dispositif d'éclairage 11 en fonction des caractéristiques de couleur de la fleur à extraire dudit compartiment.

Ainsi, un même compartiment 10 peut permettre le stockage de plusieurs couleurs d'un même type de fleurs, ce qui limite le nombre de compartiments sans augmenter le risque d'erreur pour l'opérateur. Ainsi, par exemple, la couleur de l'organe d'éclairage peut être jaune pour une fleur jaune, orange pour une fleur orange, etc.

Chaque compartiment 10 est encore équipé d'un dispositif de contrôle d'accès 12 pour permettre le contrôle de la sortie d'une fleur dudit compartiment 10. Ce dispositif de contrôle d'accès 12 peut présenter un grand nombre de formes. À titre d'exemple, le dispositif de contrôle d'accès 12 d'au moins l'un des compartiments 10 du support 3 de stockage est un dispositif optique comprenant au moins un émetteur et un récepteur. L'émetteur et le récepteur sont reliés par un rayon lumineux non visible à l'œil nu. L'interruption du rayon par passage d'une fleur est détectée par le récepteur et un signal est adressé à l'unité de pilotage 4.

Dans l'exemple représenté aux figures, l'émetteur et le récepteur du dispositif de contrôle d'accès 12 sont disposés en regard sur deux intercalaires formant respectivement une rive longitudinale du compartiment de 10. Idéalement, cet émetteur et ce récepteur sont disposés à une extrémité des intercalaires. Cette extrémité correspond à l'extrémité des intercalaires positionnée la plus proche de l'opérateur. Le faisceau s'étend sensiblement à l'horizontale et transversalement, en particulier orthogonalement aux deux intercalaires, quand les deux intercalaires de délimitation du compartiment 10 sont parallèles.

L'unité 4 de pilotage est configurée pour commander chaque dispositif d'éclairage 11 en fonction au moins des données fournies par les dispositifs 12 de contrôle d'accès et l'affichage de l'écran 6 en fonction au moins des données fournies par le détecteur 9 équipant le poste 2 de conformation.

Ainsi, l'unité 4 de pilotage est configurée pour recevoir un fichier de données correspondant aux fleurs 20 d'un bouquet avec pour chaque fleur 20, au moins une donnée représentative de l'emplacement 7 de la fleur dans le conformateur 5 et une donnée correspondant au compartiment 10 du support 3 de stockage à éclairer avec le dispositif d'éclairage 11 associé. La donnée représentative de l'emplacement 7 de la fleur dans le conformateur 5 comprend généralement une information relative à l'emplacement 7 dans le conformateur et une information relative au type de fleurs à positionner dans l'emplacement 7. Ces données forment donc, une fois affichées à l'écran, un modèle de pose pour l'opérateur. En effet, l'écran 6 affiche simultanément une représentation de la fleur à positionner dans l'emplacement 7 et une représentation de l'emplacement 7 et/ou d'un élément de repérage dudit emplacement 7. Ainsi, le modèle de pose peut comprendre un dessin ou une photo de la fleur associée à un numéro ou à une couleur du compartiment, ces représentations pouvant éventuellement être complétées par un dessin du conformateur avec le compartiment concerné.

Bien évidemment, il est possible d'afficher à l'écran simultanément plusieurs dessins ou photos de fleurs associées chacune à un élément de repérage d'un compartiment lorsque le bouquet à réaliser est complexe. Le fonctionnement tel que décrit s'applique à au moins l'une des données affichées. En parallèle de la réception d'une donnée représentative de l'emplacement 7 de la fleur dans le conformateur, l'unité 4 de pilotage reçoit une donnée correspondant au compartiment 10 du support 3 de stockage à éclairer avec le dispositif d'éclairage 11 associé. À partir de ces deux données, l'unité 4 de pilotage commande l'activation du dispositif d'éclairage 11 du compartiment 10 du support 3 de stockage stockant la fleur 20 correspondant audit couple de données et affiche simultanément à l'écran 6 au moins les représentations d'au moins un emplacement 7 du conformateur 5 et/ou du ou d'au moins un élément 8 de repérage dudit emplacement 7 et de la fleur 20 correspondant audit couple de données à positionner dans ledit emplacement 7.

L'opérateur comprend donc qu'il va effectuer au moins une partie du modèle de pose qui s'affiche à l'écran avec la fleur positionnée dans le compartiment 10 éclairé. L'opérateur saisit la fleur dans le compartiment 10 éclairé et vient la positionner dans l'emplacement 7 du conformateur repéré à l'écran. Il peut vérifier qu'il exécute correctement en comparant la fleur qu'il a saisie avec l'image de la fleur qui s'affiche à l'écran. Généralement, lorsque l'opérateur a extrait la fleur du compartiment 10 éclairé, cette sortie ayant été détectée par le dispositif de contrôle d'accès 12, le dispositif d'éclairage 11 du compartiment 10 est désactivé, c'est-à-dire que le compartiment 10 n'est plus éclairé. L'opérateur positionne la fleur dans l'emplacement 7 du conformateur repéré à l'écran et cette introduction de la fleur dans le conformateur 5 est détectée par le détecteur 9. A réception d'un signal du détecteur 9, l'unité 4 de pilotage est configurée pour afficher un nouveau modèle de pose et commander à nouveau l'éclairage d'un compartiment 10. Ces étapes sont représentées aux figures 2 à 4. On comprend donc que l'unité 4 de pilotage est configurée pour passer à au moins un nouveau couple de données lorsque le dispositif de contrôle d'accès 12 et le détecteur 9 ont détecté respectivement la sortie d'une fleur du compartiment 10 éclairé du support 3 de stockage stockant la fleur 20 correspondant audit premier couple de données et l'entrée d'une fleur dans le conformateur 5.

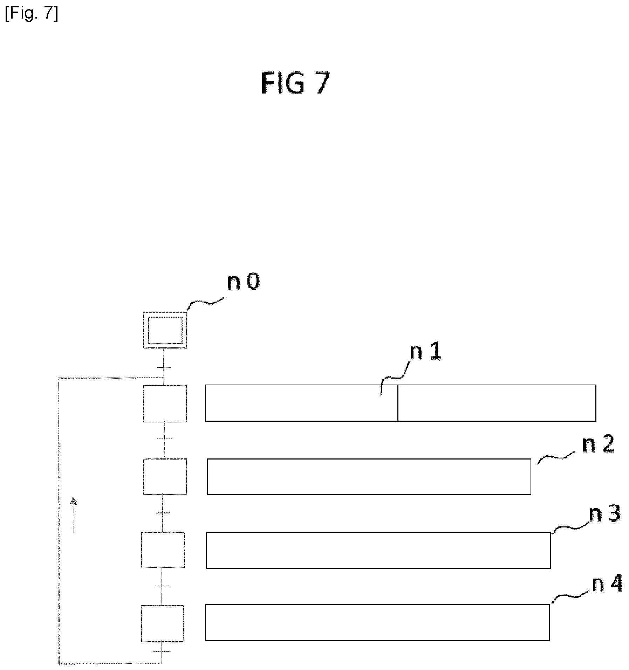

Les étapes telles que décrites ci-dessus sont reprises à la figure 7 sous forme d'un bloc diagramme fonctionnel. On suppose que des fleurs ont été disposées dans des compartiments du support 3 de stockage et que leur disposition est connue.

Dans un premier temps, à l'étape n 0, l'opérateur sélectionne par exemple sur l'écran qui est un écran tactile le bouquet à réaliser. La sélection du bouquet correspond en pratique à la sélection d'un fichier de données, tel que décrit ci-dessus, avec chaque paire de données correspondant à une fleur du bouquet.

A l'étape n1, l'unité 4 de pilotage commande à l'écran l'affichage d'une fleur et d'une représentation d'un emplacement 7 par exemple, sous forme d'au moins un élément de repérage de l'emplacement 7. En parallèle, l'unité 4 de pilotage commande l'activation d'un dispositif d'éclairage 11 d'un compartiment 10. Le compartiment 10 est alors éclairé par le ou les organes d'éclairage du dispositif d'éclairage 11 associé.

A l'étape n2, l'opérateur saisit une fleur dans le compartiment éclairé.

À l'étape n3, l'éclairage du compartiment s'éteint car le dispositif de contrôle d'accès 12 du compartiment a détecté la sortie de la fleur du compartiment.

A l'étape n4, l'opérateur dispose la fleur venant d'être extraite d'un compartiment du support de stockage, dans un emplacement du conformateur correspondant à celui représenté à l'écran.

Une fois que le détecteur 9 a détecté une entrée de la fleur dans le conformateur, les étapes n1 à n4 peuvent être répétées pour une nouvelle fleur du bouquet. Bien évidemment, les étapes n1 et n4 peuvent être réalisées pour une fleur ou plusieurs fleurs. Dans ce cas, plusieurs compartiments sont éclairés, l'écran affiche plusieurs fleurs associées chacune à un emplacement et le changement d'affichage de l'écran ne s'opère que lorsque tous les dispositifs d'éclairage sont éteints et que toutes les fleurs correspondant aux compartiments éclairés ont été placées dans le conformateur.

On comprend que les étapes du procédé de fabrication d'un bouquet, telles que décrites ci-dessus, peuvent être réalisées par un opérateur inexpérimenté n'ayant aucune connaissance dans le domaine des fleurs et de la réalisation de bouquet.

## Revendications

1. Installation (1) pour la formation de bouquet à partir de fleurs (20) coupées, ladite installation (1) comprenant au moins un poste (2) de conformation dudit bouquet, un support (3) de stockage pour le stockage de fleurs (20) coupées en attente d'un transfert dans le poste (2) de conformation et une unité (4) de pilotage, le poste (2) de conformation comprenant un conformateur (5) et au moins un écran (6) d'affichage, ledit conformateur (5) délimitant une pluralité d'emplacements (7) de réception de fleurs et comprenant, pour chaque emplacement (7), au moins un élément (8) de repérage dudit emplacement (7), et l'unité (4) de pilotage étant configurée pour afficher sur le au moins un écran (6) simultanément les représentations d'au moins un emplacement (7) du conformateur (5) et/ou du ou d'au moins un élément (8) de repérage dudit emplacement (7) et d'au moins une fleur à positionner dans ledit emplacement (7), **caractérisée en ce que** le poste (2) de conformation est équipé d'un détecteur (9) d'introduction d'au moins une fleur (20) dans le conformateur (5), **en ce que** le support (3) de stockage, positionné à côté du poste (2) de conformation, présente une pluralité de compartiments (10) équipés chacun au moins d'un dispositif d'éclairage (11) et d'un dispositif de contrôle d'accès (12), et **en ce que** l'unité (4) de pilotage est configurée pour commander chaque dispositif d'éclairage (11) et l'affichage de l'écran (6) en fonction des données fournies par le détecteur (9) et les dispositifs de contrôle d'accès (12).

2. Installation (1) pour la formation de bouquet à partir de fleurs (20) coupées selon la revendication 1, **caractérisée en ce que** l'unité (4) de pilotage est configurée pour :
- recevoir un fichier de données correspondant aux fleurs (20) d'un bouquet avec, pour chaque fleur (20), au moins une donnée représentative de l'emplacement (7) de la fleur dans le conformateur (5) et une donnée correspondant au compartiment (10) du support (3) de stockage à éclairer avec le dispositif d'éclairage (11) associé,
- pour au moins un premier couple de données, activer le dispositif d'éclairage (11) du compartiment (10) du support (3) de stockage stockant la fleur (20) correspondant audit couple de données et afficher simultanément à l'écran (6) au moins les représentations d'au moins un emplacement (7) du conformateur (5) et/ou du ou d'au moins un élément (8) de repérage dudit emplacement (7) et de la fleur (20) correspondant audit couple de données à positionner dans ledit emplacement (7) et,
- passer à au moins un nouveau couple de données lorsque le dispositif de contrôle d'accès (12) et le détecteur (9) ont détectés respectivement la sortie d'une fleur du compartiment (10) éclairé du support (3) de stockage stockant la fleur (20) correspondant audit premier couple de données et l'entrée d'une fleur dans le conformateur (5).

3. Installation (1) pour la formation de bouquet à partir de fleurs (20) coupées selon la revendication 2, **caractérisée en ce que** l'unité (4) de pilotage est configurée pour, au moins pour le premier couple de données, désactiver le dispositif d'éclairage (11) du compartiment (10) du support (3) de stockage stockant la fleur (20) correspondant audit premier couple de données au moins lorsque le dispositif d'accès (12) dudit compartiment (10) a détecté la sortie d'une fleur dudit compartiment (10).

4. Installation (1) pour la formation de bouquet à partir de fleurs (20) coupées selon l'une des revendications 1 à 3, **caractérisée en ce qu'**au moins l'un des compartiments (10) du support (3) de stockage qui se présente sous forme d'un couloir allongé est réglable en largeur.

5. Installation (1) pour la formation de bouquet à partir de fleurs (20) coupées selon l'une des revendications 1 à 4, **caractérisée en ce que** le support (3) de stockage comprend au moins un plan (13) de travail et des intercalaires (14) et **en ce qu'**au moins l'un des compartiments (10), qui se présente sous forme d'un couloir, est formé par l'espace laissé libre entre deux intercalaires (14).

6. Installation (1) pour la formation de bouquet à partir de fleurs (20) coupées selon la revendication 5, **caractérisée en ce que** les intercalaires (14) sont montés mobiles dans le sens d'un rapprochement ou d'un écartement l'un de l'autre pour un réglage en largeur dudit compartiment (10).

7. Installation (1) pour la formation de bouquet à partir de fleurs (20) coupées selon l'une des revendications 5 ou 6, **caractérisée en ce que** chaque intercalaire (14) se présente sous forme d'une lame portant au moins une partie d'un dispositif d'éclairage (11) et au moins une partie de l'un des dispositifs de contrôle d'accès (12).

8. Installation (1) pour la formation de bouquet à partir de fleurs (20) coupées selon l'une des revendications 5 à 7, **caractérisée en ce que** les intercalaires (14) sont montés sur un arbre (15) commun et sont, par rapport audit arbre (15), montés mobiles à coulissement le long dudit arbre (15) et à pivotement autour dudit arbre (15) pour le passage d'une position basse en appui sur le plan (13) de travail à une position haute écartée du plan (13) de travail.

9. Installation (1) pour la formation de bouquet à partir de fleurs (20) coupées selon l'une des revendications 1 à 8, **caractérisée en ce que** le dispositif d'éclairage (11) d'au moins l'un des compartiments (10) du support (3) de stockage est muni d'au moins un organe d'éclairage (16) formant un témoin lumineux allumé à l'état activé du dispositif d'éclairage (11).

10. Installation (1) pour la formation de bouquet à partir de fleurs (20) coupées selon l'une des revendications 1 à 9, **caractérisée en ce que** le dispositif d'éclairage (11) d'au moins l'un des compartiments (10) du support (3) de stockage est muni d'au moins un organe d'éclairage (16) présentant plusieurs couleurs d'éclairage et **en ce que** l'unité (4) de pilotage est configurée pour commander la couleur d'éclairage du ou des organes d'éclairage (16).

11. Installation (1) pour la formation de bouquet à partir de fleurs (20) coupées selon l'une des revendications 1 à 10, **caractérisée en ce qu'**au moins l'un des compartiments (10) du support (3) de stockage est équipé d'un logement pour la réception d'un seau (18).

12. Installation (1) pour la formation de bouquet à partir de fleurs (20) coupées selon l'une des revendications 1 à 11, **caractérisée en ce que** le dispositif de contrôle d'accès (12) d'au moins l'un des compartiments (10) du support (3) de stockage est un dispositif optique comprenant au moins un émetteur et un récepteur.

13. Procédé pour la formation de bouquet à partir de fleurs (20) coupées avec une installation (1) pour la formation de bouquet à partir de fleurs coupées, **caractérisé en ce que** l'installation (1) est conforme à la revendication 2 ou l'une des revendications 3 à 12 prise en combinaison avec la revendication 2, et **en ce que** le procédé comprend au moins les étapes
- de réception d'un fichier de données correspondant aux fleurs d'un bouquet avec, pour chaque fleur, au moins une donnée représentative de l'emplacement (7) de la fleur dans le conformateur (5) et une donnée correspondant au compartiment (10) du support (3) de stockage à éclairer avec un dispositif d'éclairage (11) associé,
- pour au moins un premier couple de données, d'activation du dispositif d'éclairage (11) du compartiment (10) du support (3) de stockage stockant la fleur correspondant audit couple de données et d'affichage simultané à l'écran (6) d'au moins les représentations d'au moins un emplacement (7) du conformateur (5) et/ou du ou d'au moins un élément (8) de repérage dudit emplacement (7) et de la fleur correspondant audit couple de données à positionner dans ledit emplacement (7) et,
- de passage à au moins un nouveau couple de données lorsque le dispositif de contrôle d'accès (12) et le détecteur (9) ont détecté respectivement la sortie d'une fleur du compartiment (10) éclairé du support (3) de stockage stockant la fleur correspondant audit premier couple de données et l'entrée d'une fleur dans le conformateur (5).
